# EUROPEAN PATENT APPLICATION

(11) **EP 2 573 984 A1**
(43) Date of publication of application: **27.03.2013**
(21) Application number: 11782877.2
(22) Date of filing: 24.02.2011
(51) Int. Cl.: H04L 12/54

(54) **SYSTEM AND METHOD FOR NETWORK ACTIVITY INTERACTION, CLIENT AND SERVER THEREOF**

(30) Priority: 18.05.2010 CN 201010184023
(71) Applicant: Tencent Technology (Shenzhen) Company Limited, Shenzhen, Guangdong 518044 (CN)
(72) Inventor: CHEN, Zhuo, Guangdong 518044 (CN); FU, Xuebao, Guangdong 518044 (CN); HUANG, Jiale, Guangdong 518044 (CN); LIU, Li, Guangdong 518044 (CN); CHEN, Guosheng, Guangdong 518044 (CN); DU, Zhi, Guangdong 518044 (CN); ZHU, Qiulei, Guangdong 518044 (CN); LI, Wenqing, Guangdong 518044 (CN); ZHANG,Yun, Guangdong 518044 (CN)
(74) Representative: Michalski Hüttermann & Partner Patentanwälte
(86) International application number: PCT/CN2011/071235
(87) International publication number: WO 2011/143960

(57) **Abstract**

A network activity interactive system is provided in the present invention which includes: a creating module for creating network activity contents; an interactive module for obtaining requests for participating the network activity and participant data submitted by a user, determining whether the participant data submitted by the user are in conformity with the network activity contents, if yes, adding the user into a participant user group of the network activity, and storing the user's participant data into a participant reply content volume of the network activity; a database for storing the network activity contents, the participant user group of the network activity, and the participant reply content volume which collects the participant data submitted by the user; a presenting module for presenting the network activity content and the participant reply content volume of the network activity. Furthermore, a method, a client and a server for network activity interactive are also provided. The present interactive system and method hereof, ensure that the participant data submitted by the user are in conformity with the created network activity contents, and make the contents' format unified and easy to read.

## Description

### FIELD OF THE INVENTION

The present invention relates to computer technology, and more particularly relates to a network activity interactive system and method, client and server thereof.

### BACKGROUND OF THE INVENTION

As the popularization of computers, it's more and more convenient for people's information communication. People can perform information interaction through the Social Network Service (SNS). In the SNS community, people can create all kinds of groups through which users with same interests are convened. Furthermore, people can also post some network activity information to assemble some other people to join the activity together. However, in a traditional SNS community, there is no criterion for the format of the activity contents created by a user. It only supports that people assemble some other people to join the activity. There are many kinds of activity contents with different formats. The contents replied by the user when he/she participates the network activity are disordered and inconvenient to read.

### SUMMARY OF THE INVENTION

Therefore, it's necessary to provide an interactive system of a network activity which can make the activity content's format unified and easy to read.

Furthermore, it's necessary to provide an interactive method of a network activity which can make the activity content's format unified and easy to read.

A network activity interactive system, comprises:
a creating module for creating network activity contents;
an interactive module for obtaining requests submitted by a user for participating the network activity and participant data submitted by the user, determining whether the participant data submitted by the user are in conformity with the network activity contents, if yes, adding the user into a participant user group of the network activity, and storing the participant data submitted by the user into a participant reply content volume of the network activity;
a database for storing the network activity content, the participant user group of the network activity, and the participant reply content volume which collects the participant data submitted by the user;
a presenting module for presenting the network activity content and the participant reply content volume of the network activity.

Preferably, the network activity contents comprise an activity title, activity detail content, activity time, activity classification, participation conditions and activity examples; the interactive module further determines whether the participant data submitted by the user are in conformity with the participation conditions and the activity examples, if yes, storing the participant data submitted by the user into the participant reply content volume of the network activity, and adding the user into the participant user group of the network activity.

Preferably, the creating module further assigns an identification code of the network activity, an identification code of a group that a post corresponding to the network activity is disposed therein, and an identification code of the post; and the database comprises:
a activity information storing module indexed by the identification code of the network activity for storing the network activity contents, the participant user group of network activity, the identification code of the group and the identification code of the post;
a post information storing module indexed by the identification code of the identification code of the group and the identification code of the post for storing the post title, the identification code of the network activity and the post contents which comprising the activity example of the network activity and the participant reply content volume which collects the participant data submitted by the user of the network activity;
a user activity storing module for storing the network activity created and participated by the user, and adding the network activity created by the user into the network activity creating volume of the user, adding the network activity participated by the user into the network activity participating volume.

Preferably, the creating module further obtains a network activity creating request submitted by the user and the network activity contents, submits and stores the network activity contents into the activity information storing module and the post information storing module , creats a cross checking relationship between the activity information storing module and the post information storing module for the network activity contents, and determines whether the cross checking relationship is created successfully, if yes, adds the network activity into the network activity creating volume of the user activity storing module by the creating module, if no, re-submits and stores the network activity contents to the activity information storing module and the post information storing module by the creating module.

Preferably, the network activity interactive system further comprises a reply module for obtaining normal reply contents about the network activity contents submitted by the user and storing the normal reply contents into the post information storing module .

Preferably, the network activity interactive system further comprises a query module for inquiring the network activity contents and/or network activity records of the user.

Preferably, when inquiring the network activity contents, the query module further obtains the corresponding network activity contents in the activity information storing module, the activity example of the corresponding network activity in the post information storing module and the participant reply content volume of the network activity, and presents them by the presenting module.

Preferably, when the query module inquires the network activity records, further obtains the network activity creating volume and the network activity participating volume of the corresponding user in the user activity storing module, and presents them by the presenting module.

Preferably, the network activity interactive system further comprises a comment module for obtaining comment contents of the participant data submitted by the user in the participant reply volume of the network activity, storing the comment contents into the post information storing module , and presenting the comment contents by the presenting module.

A network activity interactive method, comprises:
creating and storing network activity contents;
obtaining requests submitted by a user for participating the network activity and the participant data submitted by the user, determining whether the participant data submitted by the user are in conformity with the network activity contents, if yes, adding the user into a participant user group of the network activity and storing the participant data submitted by the user into a participant reply volume of the network activity, if no, failing to participate the network activity;
presenting the network activity contents and the participant reply content volume of the network activity.

Preferably, the network activity contents comprise an activity title, activity content, activity time, activity classification, participation conditions and activity examples; the detail procedure of determining whether the participant data submitted by the user are in conformity with the network activity contents comprises: determining whether the participant data submitted by the user are in conformity with the participation conditions and the activity examples, if yes, storing the participant data submitted by the user into the participant reply volume of the network activity, and adding the user into the participant user group of the network activity.

Preferably, the network activity interactive method further comprises:
assigning an identification code of the network activity, an identification code of a group that a post corresponding to the network activity is disposed therein, and an identification code of the post; and
indexed by the identification code of the network activity, storing the network activity contents, the participant user group of the network activity, the identification code of the group and the identification code of the post into an activity information storing module;
indexed by the identification code of the group and the identification code of the post, storing the post title, the identification code of the network activity, and the post contents which comprising the activity example of the network activity and the participant reply content volume which collects the participant data submitted by the user of the network activity into a post information storing module;
storing the network activity created and participated by the user, and adding the network activity created by the user into a network activity creating volume of the user, adding the network activity participated by the user into a network activity participating volume.

Preferably, the network activity interactive method further comprises:
obtaining a network activity creating request and the network activity contents submitted by the user;
submitting the network activity contents to the activity information storing module and the post information storing module for storing;
creating a cross checking relationship between the activity information storing module and the post information storing module for the network activity contents;
determining whether the cross checking relationship is created successfully, if yes, adding the network activity into the network activity creating volume of the user activity storing module, if no, re-submitting and storing the network activity contents to the activity information storing module and the post information storing module.

Preferably, the network activity interactive method further comprises: obtaining normal reply contents about the network activity contents submitted by the user, storing and presenting those normal reply contents.

Preferably, the network activity interactive method further comprises: inquiring and browsing the network activity contents and/or network activity records of the user.

Preferably, the procedure of inquiring and browsing the network activity contents comprises:
obtaining the user's request of inquiring and browsing the network activity contents;
obtaining the corresponding network activity contents and the participant reply content volume of the network activity according to the request of inquiring and browsing the network activity contents;
presenting the network activity contents and the participant reply content volume of the network activity.

Preferably, the procedure of inquiring and browsing the network activity records of the user comprises:
obtaining the request of inquiring and browsing the network activity records of the user;
obtaining the network activity creating volume of the user and the network activity participated by the user according to the request of inquiring and browsing the network activity records of the user;
presenting the network activity creating volume and the network activity participating volume of the user.

Preferably, the network activity interactive method further comprises: obtaining comment contents of the participant data submitted by the user in the participant reply volume of the network activity; storing and presenting the comment contents.

A client, comprises:
a creating module for creating network activity contents;
an interactive module for obtaining requests submitted by a user for participating the network activity and participant data submitted by the user, and comparing the participant data submitted by the user with the network activity contents;
a presenting module for presenting the network activity contents and the participant data submitted by the user when the participant data submitted by the user are in conformity with the network activity contents according to the comparing result of the interactive module.

Preferably, the network activity contents comprise an activity title, activity detail content, activity time, activity classification, participation conditions and activity examples; the interactive module further compares the participant data submitted by the user with the participation conditions and the activity examples.

Preferably, the client further comprises a reply module for obtaining normal reply contents submitted by the user for the network activity contents.

Preferably, the client further comprises a query module for inquiring the network activity contents and/or network activity records of the user.

Preferably, when the query module inquires the network activity contents, further obtains the network activity contents, the activity example of the corresponding network activity, and the participant reply content volume of the network activity, and presents them by the presenting module.

Preferably, when the query module inquires the network activity records of the user, further obtains the network activity creating volume of the user and the network activity volume participated by the user, and presents them by the presenting module.

Preferably, the client further comprises a comment module for obtaining comment contents of the participant data submitted by the user in the participant reply volume of the network activity, and presenting the comment contents by the presenting module.

Preferably, the creating module assigns an identification code of the network activity, an identification code of a group that a post corresponding to the network activity is disposed therein, and an identification code of the post.

A server, comprises:
a database for storing network activity contents, a participant user group of the network activity and a participant reply content volume which collects participant data submitted by a user;
an update module for adding the user into the participant user group of the network activity, storing the participant data submitted by the user into the participant reply content volume of the network activity, while the participant data submitted by the user are in conformity with the network activity contents.

Preferably, the database comprises:
a activity information storing module indexed by an identification code of the network activity for storing the network activity contents, the participant user group of the network activity, the identification code of a group and a identification code of a post;
a post information storing module indexed by the identification code of the group and the identification code of the post for storing the post title, the identification code of the network activity and the post contents which comprising the activity example of the network activity and the participant reply content volume which collects the participant data submitted by the user of the network activity;
a user activity storing module for storing the network activity created and participated by the user, and adding the network activity created by the user into the network activity creating volume of the user, adding the network activity participated by the user into the network activity participating volume of the user.

The present interactive system and method, the client and the server ensure that the participant data submitted by the user are in conformity with the created network activity contents, and make the contents' format unified and easy to read, by creating network activity contents, obtaining participant data submitted by the user, determining whether the participant data submitted by the user are in conformity with the network activity contents, if yes, adding the user into the participant user group of the network activity, and storing the participant data of the user into the participant reply content volume of the network activity.

And moreover, adopting the method of determining whether the participant data submitted by the user are in conformity with the participation condition and the format of the activity example, it will filter the irregular contents availably and ensures the unified format of the participant contents submitted by the user. The operation is simple and convenient and the format is unified and easy to deploy. By inquiring, user can obtain the network activity contents, choose to participate the network activity and obtain the network activities participated and created by the user. The user's tendentiousness for things can be obtained by appraising the participant data submitted by the user.

### BRIEF DESCRIPTION OF THE DRAWINGS

FIG. 1 is a block diagram illustrating a network activity interactive system of an embodiment.
FIG. 2 is an internal block diagram illustrating a database of an embodiment.
FIG. 3 is a block diagram illustrating a network activity interactive system of another embodiment.
FIG. 4 is a flow chart illustrating a network activity interactive method of an embodiment.
FIG. 5 is a flow chart illustrating a method of creating network activity contents of an embodiment.
FIG. 6 is a flow chart illustrating a method of inquiring network activity contents of an embodiment.
FIG. 7 is a flow chart illustrating a method of inquiring network activity records of the user of an embodiment.
FIG. 8 is an internal block diagram illustrating a client of an embodiment.
FIG. 9 is an internal block diagram illustrating a server of an embodiment.

### DESCRIPTION OF THE PREFERRED EMBODIMENTS

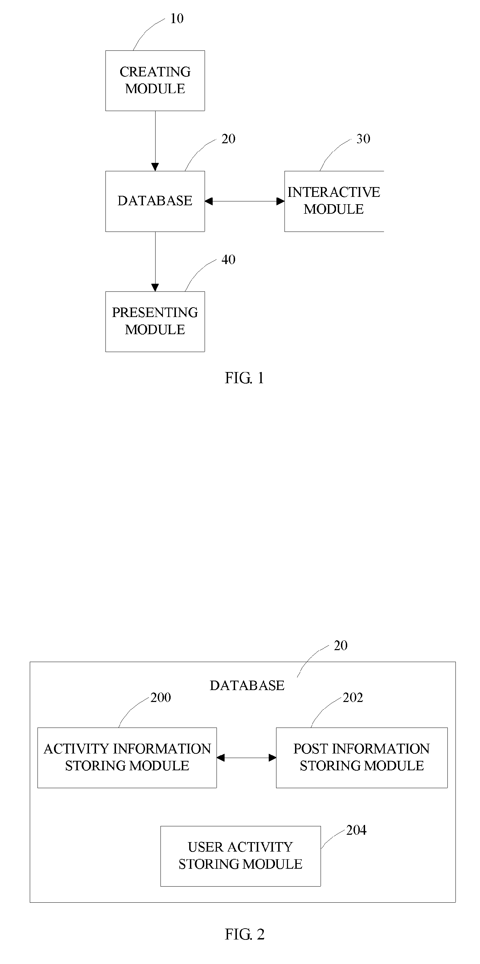

As shown in FIG. 1, a network activity interactive system includes a creating module 10, a database 20, an interactive module 30 and a presenting module 40.

The creating module 10 is used for creating network activity contents and assigning an identification code of the network activity, an identification code of a group and an identification code of a post corresponding to the network activity. The creating module 10 obtains a request submitted by a user for creating the network activity and the network activity contents. The network activity contents include an activity title, activity detail content, activity time, activity classification, participation conditions, activity examples and so on. After creating the network activity successfully, the creating module 10 assigns an identification code for the network activity. Furthermore, since the network activity contents are presented as a post, the creating module 10 also assigns an identification code for a group that the post corresponding to the network activity is disposed therein and an identification code for the post. Herein, the network activity refers to an assembling action with a topic, time and content published via a network platform, and other users can respond the assembling action on the network by signing up and participating in the assembling action. The group is a network organization format founded by users who have the same or similar interests.

The database 20 stores the created network activity contents and a participant user group of the network activity. As shown in FIG.2, the database 20 includes an activity information storing module 200, a post information storing module 202 and a user activity storing module 204. Herein, indexed by the identification code of the network activity, each record from the activity information storing module 200 stores the network activity contents, which include the activity title, the activity detail content, the activity time, the activity classification, the participation conditions, etc., and further stores the participant user group of the network activity, the identification code of the group that the post corresponding to the network activity is disposed therein, the identification code of the post, and so on. Indexed by the identification code of the group that the post corresponding to the network activity is disposed therein and the identification code of the post, each record of the post information storing module 202 stores information like a post title, the identification code of the network activity, post contents, and so on. Herein, the post contents include an activity example and a participant reply content volume which collects participant data submitted by the user of the network activity. In the present embodiment, the activity example in the post contents exists as a sequencing character string. The sequencing is a process for transforming the status information of the object, such as the activity example, into a window body which can be stored and transmitted, namely a process for transforming the object into the character string and easy for storing. Furthermore, reverse-sequencing is a reversed process of sequencing. The user activity storing module 204 stores the network activity created and participated by the user, and adds the created network activity into a network activity creating volume and a network activity participating volume of the user. The network activity creating volume of the user is to collect all network activities created by the user, for example, to present the network activity creating volume of the user as a list. The network activity participating volume of the user is similar to the network activity creating volume.

Furthermore, the creating module 10 obtains a request for creating a network activity and the network activity contents submitted by a user, and submits the network activity contents submitted by the user to the activity information storing module 200 and the post information storing module 202, and determines whether there is a cross-check relationship between the activity information storing module 200 and the post information storing module 202 for the network activity contents. If yes, the network activity is added into the network activity creating volume of the user of the user activity storing module 204. If no, the creating module 10 re-submits the network activity contents to the activity information storing module 200 and the post information storing module 202. Here, the cross-check relationship means that a user can obtain all contents of the network activity by submitting the identification code of the network activity or the identification code of the group that the post corresponding to the network activity is disposed therein and the identification code of the post.

The interactive module 30 obtains a request for participating the network activity submitted by a user and participant data submitted by the user, and determines whether the participant data are in conformity with the network activity contents. If yes, the user is added into the participant user group of the network activity and the participant data submitted by the user are stored into the participant reply content volume of the network activity. Here, the participant data submitted by the user include the personal information of the user and the participant contents. The submitted participant data are the participant reply contents of the network activity. The participant reply content volume of the network activity is a volume of the participant data submitted by all users. The detail process of determination is: from the activity information storing module 200, the interactive module 30 obtains the participation condition and the required information of the network activity of the corresponding request submitted by the user for participating the network activity, and determines whether the personal information of the user is conformed to the requirement for participating the network activity. If yes, interactive module 30 obtains the activity example of the corresponding network activity from post information storing module 202. If no, the participant of the user is unsuccessful. After obtaining the activity example, the interactive module 30 determines whether the participant data submitted by the user are in conformity with the format of the activity example. If yes, the participant data submitted by the user are sequenced and stored into the post information storing module 202, and the user is added into the participant user group of the network activity of the activity information storing module 200, and the network activity is stored into the user activity storing module 204 and added into the network activity participating volume of the user. After reverse-sequencing the participant data which are submitted by the user and stored as sequencing character strings, the post information storing module 202 presents the participant data and the identification code of the network activity in a new reply of the post of the corresponding network activity via presenting module 40, and identifies the participant contents submitted by the user by special identification. The special identification is to set a default field in a post information database for reply, wherein 0 in the default field means a normal reply from the user for the network activity and 1 in the default field means a participant reply from the user for the network activity.

The presenting module 40 is used for presenting the network activity contents and the participant reply content volume of the network activity. In the present embodiment, the network activity and the participant contents submitted by the user are presented as a post.

In order to clearly illuminate the application of the network activity interactive system, the following network activity named "Dedicating to the Mother's Day, I have an appointment with children" is described in detail.

The creating module 10 creates network activity contents, such as: the activity title is "Dedicating to the Mother's Day, I have an appointment with children"; the activity detail contents is "Around Mother's Day, write a short story about you and children (more than 150 words), provide 5 or more pictures about mother and children (clear and beautiful)"; the activity time is "Before 9th May"; the activity classification is "literature"; the participation condition is "anyone who meets the entry conditions can be applied to participate"; the activity example is "the title and the address of the composition post of the activity should be included and replied in the activity post"; the identification code of the network activity is "01"; the identification code of the group that the post corresponding to the network activity is disposed therein is "02"; the identification code of the post is "022".

The creating module 10 submits and stores the contents, "Dedicating to the Mother's Day, I have an appointment with children", to the activity information storing module 200 and the post information storing module 202. The creating module 10 also creates a cross-check relationship between the activity information storing module 200 and the post information storing module 202, thus the user can inquire all information about "Dedicating to the Mother's Day, I have an appointment with children" from the activity information storing module 200 and the post information storing module 202 by the identification code of network activity, which is "01", or the identification code of the group that the post corresponding to the network activity is disposed therein, which is "02", or the identification code of the post, which is "022". After creating the cross-check relationship successfully, the network activity "Dedicating to the Mother's Day, I have an appointment with children" is stored into the user activity storing module 204 and added into the network activity creating volume of the user.

After obtaining the participant data which is "[Mother's Day] My baby can sing and dance http://abc.abc.com/abc.html" submitted by a user named "snowing", the interactive module 30 compares the participant data with the network activity contents. Since the participant data are fulfilled the requirement of the participation condition and the activity example's format of the network activity, the user "snowing" is added into the participant user group of the network activity "Dedicating to the Mother's Day, I have an appointment with children", and the participant data submitted by "snowing" are added into the participant reply content volume of the network activity.

The presenting module 40 presents the network activity contents of "Dedicating to the Mother's Day, I have an appointment with children" and the participant data submitted by "snowing", which is "[Mother's Day] My baby can sing and dance http://abc.abc.com/abc.html".

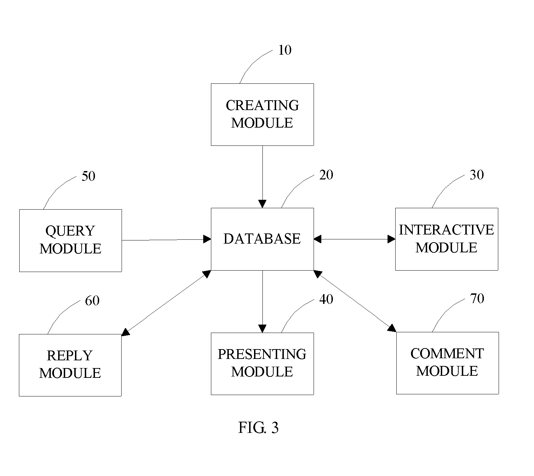

As shown in FIG. 3, in an embodiment, the present network activity interactive system further includes a query module 50 for inquiring the network activity contents and/or network activity records of the user. After obtaining a user's request about browsing network activity contents, the query module 50 obtains the corresponding network activity contents from the activity information storing module 200, and obtains the activity example of the corresponding network activity from the post information storing module 202 and the participant reply content volume of the network activity, and then presents via the presenting module 40.

In the embodiment, the present network activity interactive system further includes a reply module 60 and a comment module 70.

The reply module 60 obtains the normal reply contents submitted by the user about the network activity contents, that is, the normal reply contents don't need to be determined by the interactive module 30. After obtaining the normal reply contents submitted by the user, the reply module 60 stores them into the post information storing module 202, and appends a record in the reply list of the post of the corresponding network activity. Herein, the normal reply contents are the replies published by the user who doesn't sign up and participate in the network activity, that is, the text contents submitted by the user.

The comment module 70 is for obtaining the comment contents of the participant data submitted by the user in the participant reply volume of the network activity, storing the comment contents into the post information storing module 202, and presenting the comment contents by the presenting module 40. In the embodiment, there are two fields in comment module 70 which are "great" and "don't like". When a user reads the participant reply contents of the network activity of the participant user, he/she can click the options of "great" or "don't like" to appraise the participant reply contents. The comment module 70 stores the comment contents, increases by one for a counter of the corresponding option, and stores the counter of the corresponding option back into the post information storing module 202.

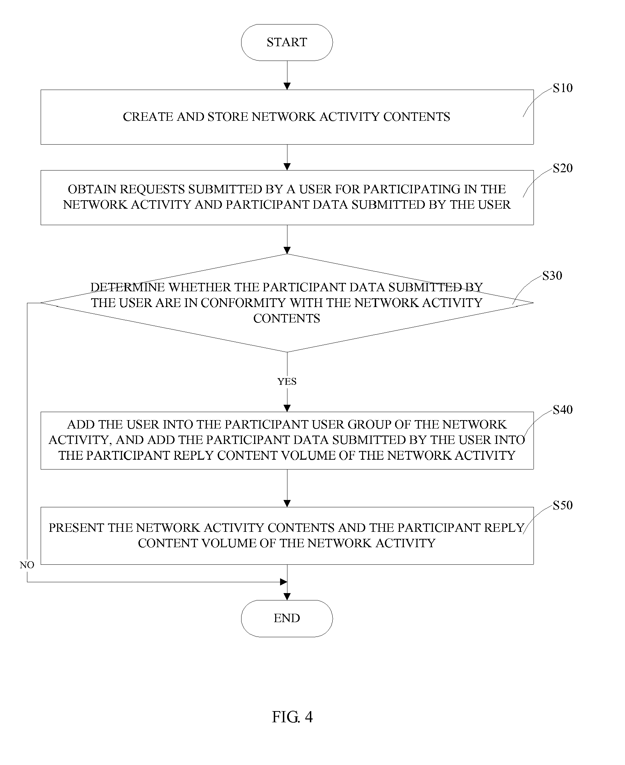

As shown in FIG. 4, a network activity interactive method, includes the following steps:
Step S10: creating and storing network activity contents. Via the creating module 10, a user submits a request of creating network activity and the network activity contents which comprise an activity title, activity detail content, activity time, activity classification, participation conditions and activity examples, and so on.

When create a network activity, the method further includes: assigning an identification code of the network activity, an identification code of a group that the post corresponding to the network activity is disposed therein, and an identification code of the post; indexed by the identification code of the network activity, storing the network activity contents, the participant user group of the network activity, the identification code of the group that the post corresponding to the network activity is disposed therein and the identification code of the post into the activity information storing module 200; indexed by the identification code of the group and the post, storing the post title, the identification code of the network activity and the post contents which comprise the activity example of the network activity and the participant reply content volume which collects the participant data submitted by the user of the network activity into the post information storing module 202; storing the network activity created and participated by the user, and adding the network activity created by the user into the network activity creating volume of the user of the user activity storing module 204, adding the network activity participated by the user into the network activity participating volume of the user activity storing module 204.

Here is an example for creating a network activity, for example: the activity title is "Dedicating to the Mother's Day, I have an appointment with children"; the activity detail content is "Around Mother's Day, write a short story about you and children (more than 150 words), provide 5 or more pictures about mother and children (clear and beautiful)"; the activity time is "Before 9th May"; the activity classification is "literature"; the participation condition is "anyone who meets the entry conditions can be applied to participate"; the activity example is "reply the address of the of the composition post of the activity in the activity post".

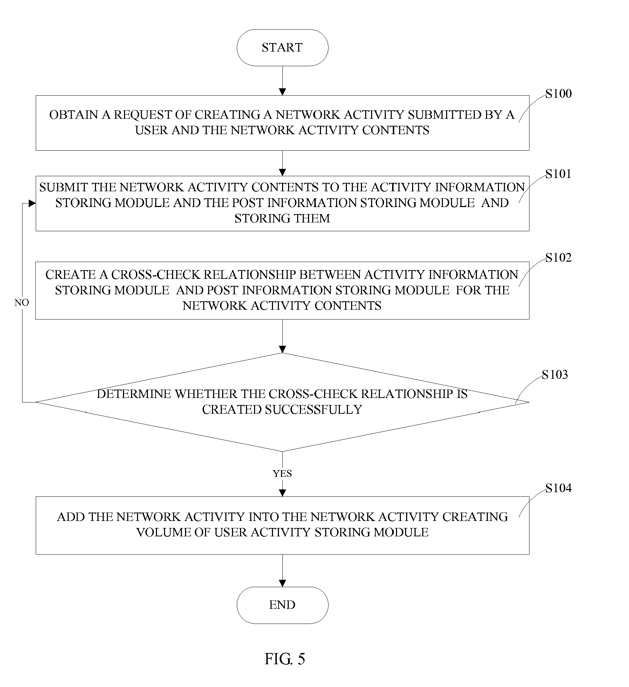

As shown in FIG. 5, the procedure of creating network activity contents comprises:
Step S100: obtaining a request of creating a network activity submitted by a user and the network activity contents such as the present network activity contents "Dedicating to the Mother's Day, I have an appointment with children".
Step S101: submitting the network activity contents to the activity information storing module 200 and the post information storing module 202 and storing them. The obtained network activity contents is submitted to the activity information storing module 200 and the post information storing module 202 for storing.
Step S102: creating a cross-check relationship between the activity information storing module 200 and the post information storing module 202 for the network activity contents. All corresponding information of the network activity contents can be inquired in the activity information storing module 200 and the post information storing module 202. In the activity information storing module 200, the network activity contents, the participant user group of the network activity, the identification code of the group and the identification code of the post of the correspond network activity are stored and indexed by the identification code of the network activity. In the post information storing module 202, the post title, the identification code of the network activity and the post contents which comprise the activity example of the network activity and the participant reply content volume which collects the participant data submitted by the user of the network activity are stored and indexed by the identification code of the group and the identification code of the post.
Step S103: determining whether the cross-check relationship is created successfully, if yes, proceeding to step S104, if no, turning back to step S101. To determine whether the network activity contents can be cross-checked between the activity information storing module 200 and the post information storing module 202 means that a user can obtain all contents of the network activity when the user submits the identification code of the network activity or the identification code of the group that the post corresponding to the network activity is disposed therein and the identification code of the post. If creating the cross-check relationship unsuccessfully, the network activity contents should be re-submitted to the activity information storing module 200 and the post information storing module 202 for storing again; and the cross-check relationship should be re-created.
Step S104: adding the network activity into the network activity creating volume of the user activity storing module 204. The user activity storing module 204 stores the network activity, and adds the network activity into the network creating volume of the user.
Step S20: obtaining requests submitted by a user for participating in the network activity and participant data submitted by the user. When participating in a network activity, the user needs to submit the corresponding data. The participant data submitted by the user include the personal information and the participant contents. The personal information is for determining whether the user has the permission to participate in the network activity. The format of participant data is the same as the network activity example such as that the personal information of the user comprises a personal email address, and so on. Furthermore, the participant data submitted by the user when the user participates in the network activity are called as participant reply contents.
Step S30: determining whether the participant data submitted by the user are in conformity with the network activity contents, if yes, proceeding to step S40, if no, ending the procedure. In the present embodiment, the procedure of determining whether the participant data submitted by the user are in conformity with the network activity contents is: determining the participant data submitted by the user are in conformity with the participation conditions and the activity contents of the network activity, if yes, proceeding to step S40, if no, ending the procedure.
Step S40: adding the user into the participant user group of the network activity, and adding the participant data submitted by the user into the participant reply content volume of the network activity. If the participant data submitted by the user have met the requirement, the user will be added into the participant user group of the network activity, and the participant data submitted by the user will be stored into the participant reply content volume of the network activity in the database.
Step S50: presenting the network activity contents and the participant reply content volume of the network activity. It's convenient for users to understand and participate by presenting the network activity contents. To present the participant reply content volume which collects the participant data submitted by the user indicates that the user participates successfully, and the user can inquire and read it. The network activity contents and the participant data submitted by the user are presented as a post.

In an embodiment, the present network activity interactive method further includes obtaining the normal reply contents submitted by the user about the network activity contents, and storing and presenting the normal reply contents. The normal reply contents are the text reply contents published by the user who doesn't sign up and participate in the network activity. For example, in the present activity "Dedicating to the Mother's Day, I have an appointment with children", since a user directly replies "Thanks, Mother" which is not a reply following the activity example, the reply contents are the normal reply contents.

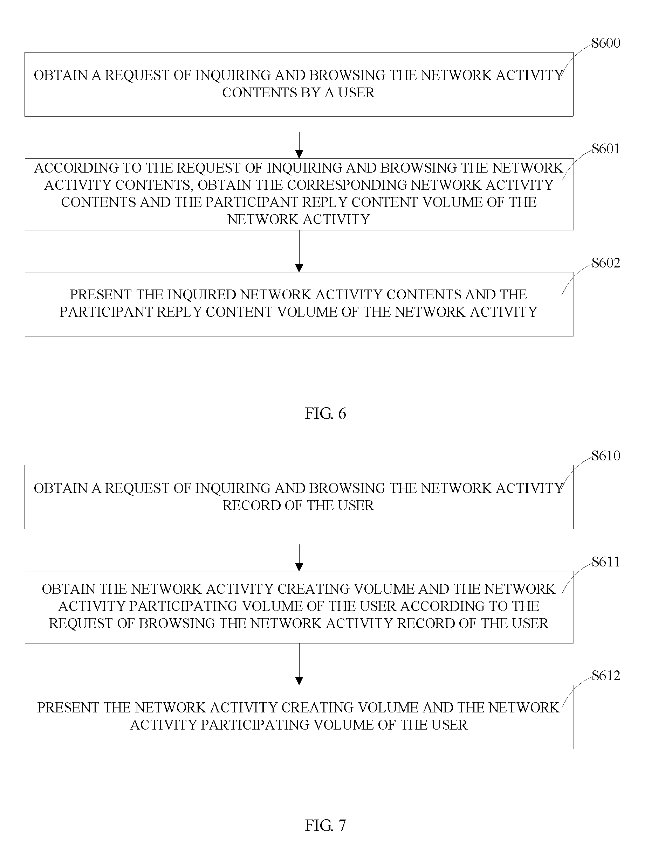

The present interactive method also comprises inquiring the network activity contents and/or the network activity records of the user. Herein, as shown in FIG. 6, the procedure of inquiring the network activity contents comprises:
Step S600: obtaining a request of inquiring and browsing the network activity contents by a user. The user submits a request of inquiring and browsing the network activity contents via query module 50.
Step S601: according to the request of inquiring and browsing the network activity contents, obtaining the corresponding network activity contents and the participant reply content volume of the network activity. Through the request of inquiring and browsing the network activity contents, the query module 50 obtains the corresponding network activity contents and the participant reply content volume of the network activity from the activity information storing module 200 and the post information storing module 202. Furthermore, if the participant reply content volume of the network activity is stored as a sequencing character string, the obtained participant reply content volume will be reverse-sequenced.
Step S602: presenting the inquired network activity contents and the participant reply content volume of the network activity.

Furthermore, as shown in FIG. 7, the procedure of inquiring the network activity record of the user comprises:
Step S610: obtaining a request of inquiring and browsing the network activity record of the user. The user submits a request of inquiring and browsing the network activity record of the user via query module 50.
Step S611: obtaining the network activity creating volume and the network activity participating volume of the user according to the request of browsing the network activity record of the user. According to the request of browsing the network activity record of the user, the query module 50 obtains the corresponding network activity creating volume and the network activity participating volume of the user from the user activity storing module 204.
Step S612: presenting the network activity creating volume and the network activity participating volume of the user.

The present network activity interactive method also comprises obtaining the comment contents of the participant data submitted by the user in the participant reply volume of the network activity, storing and presenting the comment contents. A user appraises the participant reply of the network activity of other users via the comment module.

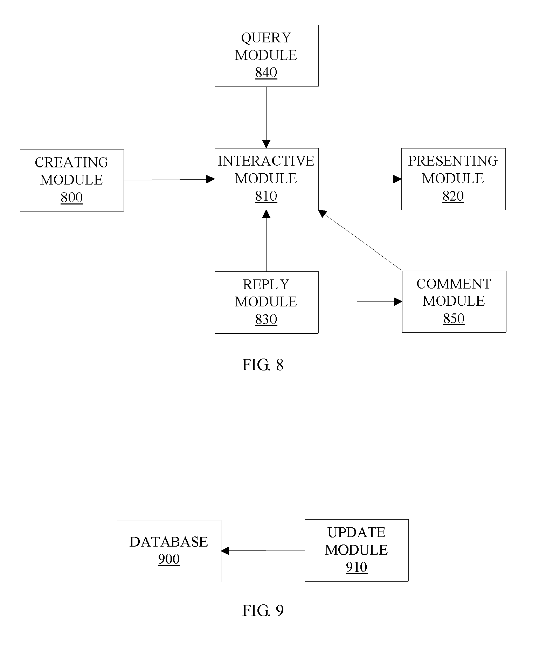

As shown in FIG. 8, in an embodiment, a client includes a creating module 800, an interactive module 810, a presenting module 820, a reply module 830, a query module 840 and a comment module 850. Herein:
The creating module 800 is used for creating network activity contents and assigning an identification code of the network activity, an identification code of a group that the post corresponding to the network activity is disposed therein, and an identification code of the post. The creating module 800 obtains a request submitted by a user of creating the network activity and the network activity contents. The network activity contents include an activity title, activity detail contents, activity time, activity classification, participation conditions, activity examples, and so on. After creating the network activity successfully, the creating module 800 also assigns an identification code for the network activity. Furthermore, since the network activity contents are presented as a post, the creating module 800 assigns the identification code of the group that the post corresponding to the network activity is disposed therein and the identification code of the post as well.

The interactive module 810 is for obtaining a request for participating in the network activity submitted by a user and the participant data submitted by the user, and comparing the participant data submitted by the user with the network activity contents. Herein, the participant data submitted by the user comprise the personal information of the user and the participant contents. By comparing the participant data submitted by the user with the network activity contents obtained from a server by the client, it can be determined whether the participant data submitted by the user are in conformity with the network activity contents. Since the network activity contents comprise activity titles, activity detail contents, activity time, activity classification, participation conditions and activity examples, the interactive module 810 further compares the participant data with the participation conditions and the activity examples.

The presenting module 820 is for presenting the network activity contents and the participant data submitted by the user when the participant data submitted by the user are in conformity with the network activity contents according to the comparing result of the interactive module 810.

The reply module 830 is for obtaining the normal reply contents about the network activity submitted by the user.

The query module 840 is for inquiring the network activity contents and/or the network activity records of a user. While inquiring the network activity contents, the query module 840 further obtains the network activity contents, the activity example of the corresponding network activity and the participant reply content volume of the network activity, and presents them via the presenting module 820. And while inquiring the network activity records of a user, the query module 840 also obtains the network activity creating volume and the network activity participating volume of the user and presents them via presenting module 820.

The comment module 850 is for obtaining comment contents of the participant data submitted by the user in the participant reply volume of the network activity and presenting the comment contents via the presenting module 820.

As shown in FIG. 9, a server includes a database 900 and a update module 910. Herein,

The database 900 is for storing the network activity contents, the participant user group of network activity and the participant reply content volume which collects the participant data submitted by the user.

The update module 910 is for adding a user into the participant user group of the network activity, storing the participant data submitted by the user into the participant reply content volume of the network activity, while the participant data submitted by the user are in conformity with the network activity contents.

In a preferred embodiment, the database 900 includes an activity information storing module, a post information storing module and a user activity storing module. Indexed by the identification code of the network activity, the activity information storing module stores the network activity contents, the participant user group of network activity, the identification code of a group and the identification code of a post; indexed by the identification code of the group and the identification code of the post, the post information storing module stores the post title, the identification code of network activity and the post contents which include the activity example of the network activity and the participant reply content volume which collects the participant data submitted by a user of the network activity; the user activity storing module stores the network activity created and participated by a user, and adds the network activity created by the user into the network activity creating volume of the user, adds the network activity participated by the user into the network activity participating volume. A cross-check relationship is created between the activity information storing module and the post information storing module.

The present interactive system and method, the client and the server ensure that the participant data submitted by the user are in conformity with the created network activity contents, and make the contents' format unified and easy to read, by creating network activity contents, obtaining participant data submitted by the user, determining whether the participant data submitted by the user are in conformity with the network activity contents, if yes, adding the user into the participant user group of the network activity, and storing the participant data of the user into the participant reply content volume of the network activity.

And moreover, adopting the method of determining whether the participant data submitted by the user are in conformity with the participation conditions and the format of the activity examples, it will filter the irregular contents availably and ensures the unified format of the participant contents submitted by the user. The operation is simple and convenient and the format is unified and easy to deploy. By inquiring, users can obtain the network activity contents, choose to participate in the network activity and obtain the network activities participated and created by the user. The user's tendentiousness for things can be obtained by appraising the participant data submitted by the user.

The present embodiments only disclose several implementation modalities, which have been described above in detail, of the present invention. It should be understood, however, that there is no intention to limit the invention to the specific forms disclosed. It should be noted that those skilled in the art can make various modifications and variations on the present invention without departing from the spirit and scope of the present invention and all these modifications and variations are still covered by the present invention. Therefore, the scope of the present invention is defined by the appended claims.

## Claims

1. A network activity interactive system, comprising:
a creating module for creating network activity contents;
an interactive module for obtaining requests submitted by a user for participating the network activity and participant data submitted by the user, determining whether the participant data submitted by the user are in conformity with the network activity contents, if yes, adding the user into a participant user group of the network activity, and storing the participant data submitted by the user into a participant reply content volume of the network activity;
a database for storing the network activity content, the participant user group of the network activity, and the participant reply content volume which collects the participant data submitted by the user;
a presenting module for presenting the network activity content and the participant reply content volume of the network activity.

2. The network activity interactive system of claim 1, wherein the network activity contents comprise an activity title, activity detail content, activity time, activity classification, participation conditions and activity examples; the interactive module further determines whether the participant data submitted by the user are in conformity with the participation conditions and the activity examples, if yes, storing the participant data submitted by the user into the participant reply content volume of the network activity, and adding the user into the participant user group of the network activity.

3. The network activity interactive system of claim 2, wherein the creating module further assigns an identification code of the network activity, an identification code of a group that a post corresponding to the network activity is disposed therein, and an identification code of the post; and the database comprises:
a activity information storing module indexed by the identification code of the network activity for storing the network activity contents, the participant user group of network activity, the identification code of the group and the identification code of the post;
a post information storing module indexed by the identification code of the identification code of the group and the identification code of the post for storing the post title, the identification code of the network activity and the post contents which comprising the activity example of the network activity and the participant reply content volume which collects the participant data submitted by the user of the network activity;
a user activity storing module for storing the network activity created and participated by the user, and adding the network activity created by the user into the network activity creating volume of the user, adding the network activity participated by the user into the network activity participating volume.

4. The network activity interactive system of claim 3, wherein the creating module further obtains a network activity creating request submitted by the user and the network activity contents, submits and stores the network activity contents into the activity information storing module and the post information storing module , creats a cross checking relationship between the activity information storing module and the post information storing module for the network activity contents, and determines whether the cross checking relationship is created successfully, if yes, adds the network activity into the network activity creating volume of the user activity storing module by the creating module, if no, re-submits and stores the network activity contents to the activity information storing module and the post information storing module by the creating module.

5. The network activity interactive system of claim 3, further comprising a reply module for obtaining normal reply contents about the network activity contents submitted by the user and storing the normal reply contents into the post information storing module.

6. The network activity interactive system of claim 3, further comprising a query module for inquiring the network activity contents and/or network activity records of the user.

7. The network activity interactive system of claim 6, wherein when inquiring the network activity contents, the query module further obtains the corresponding network activity contents in the activity information storing module, the activity example of the corresponding network activity in the post information storing module and the participant reply content volume of the network activity, and presents them by the presenting module.

8. The network activity interactive system of claim 6, wherein when the query module inquires the network activity records, further obtains the network activity creating volume and the network activity participating volume of the corresponding user in the user activity storing module, and presents them by the presenting module.

9. The network activity interactive system of claim 3, further comprising a comment module for obtaining comment contents of the participant data submitted by the user in the participant reply volume of the network activity, storing the comment contents into the post information storing module , and presenting the comment contents by the presenting module.

10. A network activity interactive method, comprising:
creating and storing network activity contents;
obtaining requests submitted by a user for participating the network activity and the participant data submitted by the user, determining whether the participant data submitted by the user are in conformity with the network activity contents, if yes, adding the user into a participant user group of the network activity and storing the participant data submitted by the user into a participant reply volume of the network activity, if no, failing to participate the network activity;
presenting the network activity contents and the participant reply content volume of the network activity.

11. The network activity interactive method of claim 10, wherein the network activity contents comprise an activity title, activity content, activity time, activity classification, participation conditions and activity examples; the detail procedure of determining whether the participant data submitted by the user are in conformity with the network activity contents comprising: determining whether the participant data submitted by the user are in conformity with the participation conditions and the activity examples, if yes, storing the participant data submitted by the user into the participant reply volume of the network activity, and adding the user into the participant user group of the network activity.

12. The network activity interactive method of claim 11, further comprising:
assigning an identification code of the network activity, an identification code of a group that a post corresponding to the network activity is disposed therein, and an identification code of the post; and
indexed by the identification code of the network activity, storing the network activity contents, the participant user group of the network activity, the identification code of the group and the identification code of the post into an activity information storing module;
indexed by the identification code of the group and the identification code of the post, storing the post title, the identification code of the network activity, and the post contents which comprising the activity example of the network activity and the participant reply content volume which collects the participant data submitted by the user of the network activity into a post information storing module;
storing the network activity created and participated by the user, and adding the network activity created by the user into a network activity creating volume of the user, adding the network activity participated by the user into a network activity participating volume.

13. The network activity interactive method of claim 12, further comprising:
obtaining a network activity creating request and the network activity contents submitted by the user;
submitting the network activity contents to the activity information storing module and the post information storing module for storing;
creating a cross checking relationship between the activity information storing module and the post information storing module for the network activity contents;
determining whether the cross checking relationship is created successfully, if yes, adding the network activity into the network activity creating volume of the user activity storing module, if no, re-submitting and storing the network activity contents to the activity information storing module and the post information storing module.

14. The network activity interactive method of claim 12, further comprising: obtaining normal reply contents about the network activity contents submitted by the user, storing and presenting those normal reply contents.

15. The network activity interactive method of claim 12, further comprising: inquiring and browsing the network activity contents and/or network activity records of the user.

16. The network activity interactive method of claim 15, wherein the procedure of inquiring and browsing the network activity contents comprises:
obtaining the user's request of inquiring and browsing the network activity contents;
obtaining the corresponding network activity contents and the participant reply content volume of the network activity according to the request of inquiring and browsing the network activity contents;
presenting the network activity contents and the participant reply content volume of the network activity.

17. The network activity interactive method of claim 15, wherein the procedure of inquiring and browsing the network activity records of the user comprises:
obtaining the request of inquiring and browsing the network activity records of the user;
obtaining the network activity creating volume of the user and the network activity participated by the user according to the request of inquiring and browsing the network activity records of the user;
presenting the network activity creating volume and the network activity participating volume of the user.

18. The network activity interactive method of claim 12, further comprising: obtaining comment contents of the participant data submitted by the user in the participant reply volume of the network activity; storing and presenting the comment contents.

19. A client, comprising:
a creating module for creating network activity contents;
an interactive module for obtaining requests submitted by a user for participating the network activity and participant data submitted by the user, and comparing the participant data submitted by the user with the network activity contents;
a presenting module for presenting the network activity contents and the participant data submitted by the user when the participant data submitted by the user are in conformity with the network activity contents according to the comparing result of the interactive module.

20. The client of claim 19, wherein the network activity contents comprise an activity title, activity detail content, activity time, activity classification, participation conditions and activity examples; the interactive module further comparing the participant data submitted by the user with the participation conditions and the activity examples.

21. The client of claim 19, further comprising a reply module for obtaining normal reply contents submitted by the user for the network activity contents.

22. The client of claim 19, further comprising a query module for inquiring the network activity contents and/or network activity records of the user.

23. The client of claim 22, wherein when the query module inquires the network activity contents, further obtains the network activity contents, the activity example of the corresponding network activity, and the participant reply content volume of the network activity, and presents them by the presenting module.

24. The client of claim 22, wherein when the query module inquires the network activity records of the user, further obtains the network activity creating volume of the user and the network activity volume participated by the user, and presents them by the presenting module.

25. The client of claim 19, further comprising a comment module for obtaining comment contents of the participant data submitted by the user in the participant reply volume of the network activity, and presenting the comment contents by the presenting module.

26. The client of claim 19, wherein the creating module assigns an identification code of the network activity, an identification code of a group that a post corresponding to the network activity is disposed therein, and an identification code of the post.

27. A server, comprising:
a database for storing network activity contents, a participant user group of the network activity and a participant reply content volume which collects participant data submitted by a user;
an update module for adding the user into the participant user group of the network activity, storing the participant data submitted by the user into the participant reply content volume of the network activity, while the participant data submitted by the user are in conformity with the network activity contents.

28. The server of claim 27, wherein the database comprises:
a activity information storing module indexed by an identification code of the network activity for storing the network activity contents, the participant user group of the network activity, the identification code of a group and a identification code of a post;
a post information storing module indexed by the identification code of the group and the identification code of the post for storing the post title, the identification code of the network activity and the post contents which comprising the activity example of the network activity and the participant reply content volume which collects the participant data submitted by the user of the network activity;
a user activity storing module for storing the network activity created and participated by the user, and adding the network activity created by the user into the network activity creating volume of the user, adding the network activity participated by the user into the network activity participating volume of the user.
